# EUROPEAN PATENT SPECIFICATION

(11) **EP 4 510 303 B1**
(45) Date of publication and mention of the grant of the patent: **27.05.2026**
(21) Application number: 22956964.5
(22) Date of filing: 01.09.2022
(51) Int. Cl.: H01M 10/613, H01M 10/6556, H01M 10/6567, F28F 3/06, F16L 41/02

(54) **WATER COOLING JOINT, THERMAL MANAGEMENT PART, BATTERY, AND ELECTRIC DEVICE**
WASSERKÜHLUNGSVERBINDUNG, WÄRMEVERWALTUNGSTEIL, BATTERIE UND ELEKTRISCHE VORRICHTUNG
RACCORD DE REFROIDISSEMENT D'EAU, PARTIE DE GESTION THERMIQUE, BATTERIE ET DISPOSITIF ÉLECTRIQUE

(43) Date of publication of application: 19.02.2025
(73) Proprietor: Contemporary Amperex Technology Co., Limited, Jiaocheng District Ningde Fujian 352100 (CN)
(72) Inventor: XIE, Ke, Ningde City, Fujian 352100 (CN); CHEN, Xubin, Ningde City, Fujian 352100 (CN)
(74) Representative: Kraus & Lederer PartGmbB
(86) International application number: PCT/CN2022/116579
(87) International publication number: WO 2024/045139

(56) References cited:
- CN-A- 108 346 839
- CN-U- 205 646 066
- CN-U- 213 401 361
- DE-A1- 2 607 052
- JP-A- 2005 315 507
- JP-A- 2010 258 022
- US-A- 2 965 397

## Description

### TECHNICAL FIELD

The present application relates to the field of batteries, and more particularly, to a battery comprising a thermal management component which comprises a water-cooling joint, and an electrical device.

### BACKGROUND

A water-cooling joint is an important connecting part commonly used in the modern machinery industry. The water-cooling joint connection is an indispensable and important connection method in modern pipeline construction. The water-cooling joint has an excellent comprehensive performance, and therefore, it is widely applied in various basic projects such as chemical industry, construction, water supply, drainage, petroleum, light industry and heavy industry, refrigeration, sanitation, plumbing, fire protection, electric power, aerospace, and shipbuilding, and the use effect is very significant.

With the development of modern industry, performance requirements of the water-cooling joint are getting increasingly higher. It is the focus of people's attention to improve the overall structure of the water-cooling joint to meet needs of different application scenarios. Therefore, how to improve the overall structure of the water-cooling joint and improve the performance of the water-cooling joint is an urgent problem to be solved. DE 26 07 052 A1 discloses connector for pipes leading to an inlet or outlet in channels or basins with concrete walls, in particular swimming pools. US 2,965,397 A1 discloses a take-off member for use with sheet metal duct work.

### SUMMARY OF THE INVENTION

Embodiments of the present application provide a battery comprising a thermal management component which comprises a water-cooling joint, and an electrical device, which is capable of reducing energy loss during transportation of a fluid by the water-cooling joint.

In a first aspect, a battery is provided, comprising a battery cell; and a thermal management component, wherein the thermal management component is used for adjusting the temperature of the battery cell wherein the thermal management component, comprises: a fluid channel; a second fixing portion, wherein the second fixing portion surrounds an inlet of the fluid channel; and a water-cooling joint, wherein the water-cooling joint is connected to the second fixing portion. The water-cooling joint is used for being connected to an inlet of a fluid channel, and is used for guiding a fluid to the fluid channel, wherein movement directions of the fluid in front of and behind the inlet are different. The water-cooling joint includes: a first connecting pipeline, wherein a first end of the first connecting pipeline is used for being connected to the inlet, and in a direction close to the inlet, the cross-section of the first connecting pipeline gradually increases.

The water-cooling joint includes the first connecting pipeline, the first end of the first connecting pipeline is connected to the inlet of the fluid channel, and in the direction close to the inlet of the fluid channel, the cross-section of the first connecting pipeline gradually increases. In other words, the fluid is guided to the inlet of the fluid channel in the first connecting pipeline, and at the first end of the first connecting pipeline connected to the inlet of the fluid channel, the flow cross-section of the fluid is the largest, the flow velocity may be reduced, and the impact with the fluid channel may be reduced, thereby reducing the energy loss.

In a possible embodiment, the water-cooling joint includes a second connecting pipeline, a second end of the first connecting pipeline is connected to the second connecting pipeline, and the second connecting pipeline forms an angle with the first connecting pipeline.

The first connecting pipeline is connected to the second connecting pipeline for transporting the fluid, and the connecting method of forming the angle between the first connecting pipeline and the second connecting pipeline is capable of saving the space occupied by the first connecting pipeline and the second connecting pipeline in a length direction.

In a possible embodiment, the angle is an obtuse angle, so as to reduce a centripetal force required when the fluid flows at the connection between the second connecting pipeline and the first connecting pipeline, and reduce the flow separation.

In a possible embodiment, the connection between the first connecting pipeline and the second connecting pipeline is set in an arc shape.

The connection adopts an arc-shaped design to guide the fluid to flow, which can reduce a backflow area at an outer side of the flow and reduce the flow loss at the connection.

In a possible embodiment, the first connecting pipeline is a non-circular pipeline, so as to reduce the centripetal force required when the fluid flows in the first connecting pipeline, and reduce the flow separation.

In a possible embodiment, the first connecting pipeline includes an arc surface and a plane, and the arc surface is connected to the plane to form the first connecting pipeline. When the fluid flows in the first connecting pipeline, a component of a plane normal force of the first connecting pipeline can better provide the centripetal force, reduce the flow separation, and reduce the pressure drop.

In a possible embodiment, the water-cooling joint includes a first fixing portion, and the first fixing portion surrounds the outer side of the first connecting pipeline and is fixedly connected to the outer side of the first connecting pipeline.

The first fixing portion surrounds the outer side of the first connecting pipeline and is fixedly connected to the outer side of the first connecting pipeline, for fixing the first connecting pipeline, improving the stability of the water-cooling joint, and ensuring that a connection position of the first connecting pipeline and the inlet of the fluid channel is fixed, so that the first connecting pipeline guides the fluid to the fluid channel through the inlet.

In a possible embodiment, the first fixing portion is a plate-shaped structure parallel to a connecting surface of the first end and the inlet, so as to facilitate fixing of the first fixing portion, thereby better fixing the water-cooling joint.

In a possible embodiment, the first connecting pipeline and the first fixing portion are formed integrally. The structure is stable and firm, easy to assemble, and easy to operate.

The thermal management component includes: a fluid channel; a second fixing portion, the second fixing portion surrounding an inlet of the fluid channel; and the water-cooling joint described above or any possible embodiment thereof, the water-cooling joint being connected to the second fixing portion.

The water-cooling joint in the thermal management component guides a fluid to flow into the fluid channel, and the structure is ingenious in design, which is capable of reducing the energy loss during transportation of the fluid in the thermal management component and ensuring a thermal management effect of the thermal management component. In addition, the second fixing portion is connected to the water-cooling joint to fix the water-cooling joint, thereby ensuring that the water-cooling joint can smoothly guide the fluid to flow into the fluid channel.

In a possible embodiment, the second fixing portion is connected to the first fixing portion of the water-cooling joint, and the first fixing portion surrounds the outer side of the first connecting pipeline and is fixedly connected to the outer side of the first connecting pipeline.

The second fixing portion is connected to the first fixing portion of the water-cooling joint, so as to fix the first fixing portion, thereby fixing the water-cooling joint, ensuring that a connection position between the first connecting pipeline and the inlet of the fluid channel is fixed, so that the first connecting pipeline guides the fluid to the fluid channel through the inlet.

In a possible embodiment, the second fixing portion is a plate-shaped structure parallel to the connecting surface of the first end and the inlet, so as to facilitate connection of the first fixing portion and the second fixing portion, thereby being capable of better fixing the water-cooling joint.

In a possible embodiment, the second fixing portion is provided with a through hole, and the first connecting pipeline is connected to the inlet through the through hole. The second fixing portion is provided with the through hole to facilitate the connection between the first end of the first connecting pipeline and the inlet of the fluid channel.

In a possible embodiment, in a first direction, the distance from the first fixing portion to the first end is the same as the thickness of the second fixing portion, and the connecting surface of the first end and the inlet is perpendicular to the first direction.

In this way, when the first fixing portion is connected to the second fixing portion, the first connecting pipeline just matches the inlet of the fluid channel, so that the first connecting pipeline guides the fluid to the fluid channel.

The battery of the first aspect includes: a battery cell and the thermal management component as described above or any possible embodiment thereof, wherein the thermal management component is used for adjusting the temperature of the battery cell.

In a second aspect, an electrical device is provided, including the battery in the above first aspect or any possible embodiment of the first aspect, wherein the battery is used for providing electric energy.

In the technical solution of the present application, the water-cooling joint includes the first connecting pipeline, the first end of the first connecting pipeline is connected to the inlet of the fluid channel, and in the direction close to the inlet of the fluid channel, the cross-section of the first connecting pipeline gradually increases. In other words, the fluid is guided to the inlet of the fluid channel in the first connecting pipeline, and at the first end of the first connecting pipeline connected to the inlet of the fluid channel, the flow cross-section of the fluid is the largest, the flow velocity may be reduced, and the impact with the fluid channel may be reduced, thereby reducing the energy loss.

### DESCRIPTION OF DRAWINGS

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.
Fig. 1 is a schematic structural diagram of a vehicle disclosed in an embodiment of the present application;
Fig. 2 is a schematic exploded structural diagram of a battery disclosed in an embodiment of the present application;
Fig. 3 is a schematic structural diagram of a water-cooling joint disclosed in an embodiment of the present application;
Fig. 4 is a schematic cross-sectional diagram of a water-cooling joint disclosed in an embodiment of the present application;
Fig. 5 is a schematic cross-sectional diagram of a thermal management component disclosed in an embodiment of the present application;
Fig. 6 is a schematic structural diagram of a thermal management component disclosed in an embodiment of the present application; and
Fig. 7 is a schematic structural diagram of a second fixing portion and a fluid channel disclosed in an embodiment of the present application.

In the drawings, the drawings are not drawn to actual scale.

### DETAILED DESCRIPTION

The embodiments of the present application need to be further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise defined, all technical and scientific terms used herein have the same meaning as commonly understood by those skilled in the art to which the present application belongs. The terms used herein are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The meaning of "a plurality of" refers to two or more. Orientations or positional relationships indicated by terms "up," "down," "left," "right," "inside," "outside," and the like are only used for the convenience of describing and simplifying the present application, rather than indicating or implying that the apparatus or element referred to must have a specific orientation, be constructed and operated in a specific orientation, and therefore cannot be understood as a limitation on the present application. In addition, the terms "first," "second," "third," and the like are used for descriptive purposes only, and cannot be construed as indicating or implying relative importance. "Vertical" is not strictly vertical, but within a margin of error allowed. "Parallel" is not strictly parallel, but within a margin of error allowed.

Reference herein to "an embodiment" means that a particular feature, structure, or characteristic described in connection with the embodiment can be included in at least one embodiment of the present application. The appearance of the phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

The orientation words appearing in the following description are directions shown in the drawings, and do not limit the specific structure of the present application. In the description of the present application, it should be further noted that terms "mounting," "connecting," and "connection" should be understood in a broad sense, unless otherwise explicitly specified or defined. For example, it may be a fixed connection, a detachable connection, or an integrated connection; and it may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects in front of and behind it are in an "or" relationship.

In the present application, a battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cells may be cylindrical, flat, rectangular, or in other shapes, which is not limited in the embodiments of the present application. The battery cells are generally classified into three types according to packaging manners: cylindrical battery cells, cuboid rectangular battery cells, and pouch cells, which are not limited in the embodiments of the present application.

The battery mentioned in the embodiments of the present application refers to a single physical module including one or a plurality of battery cells to provide a higher voltage and capacity. For example, the battery mentioned in the present application may include a battery pack or the like. The battery generally includes a box body for encapsulating one or a plurality of battery cells. The box body can prevent liquids or other foreign matters from affecting charging or discharging of the battery cells.

The battery cell includes an electrode assembly and an electrolyte solution, and the electrode assembly is composed of a positive electrode plate, a negative electrode plate, and a separator. The battery cell works mainly relying on the movement of metal ions between the positive electrode plate and the negative electrode plate. The positive electrode plate includes a positive electrode current collector and a positive electrode active material layer. The positive electrode active material layer is coated on a surface of the positive electrode current collector. The current collector not coated with the positive electrode active material layer protrudes from the current collector coated with the positive electrode active material layer. The current collector not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. The negative electrode active material layer is coated on a surface of the negative electrode current collector. The current collector not coated with the negative electrode active material layer protrudes from the current collector coated with the negative electrode active material layer. The current collector not coated with the negative electrode active material layer serves as a negative tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The material of the separator may be polypropylene (PP), polyethylene (PE), or the like. In addition, the electrode assembly may be of a wound structure or a laminated structure, which is not limited in the embodiments of the present application.

In order to meet different power requirements, the battery may include a plurality of battery cells, wherein the plurality of battery cells may be in series connection, in parallel connection, or in parallel-series connection, and the parallel-series connection refers to a mixture of the series connection and the parallel connection. Optionally, the plurality of battery cells may be in series connection, parallel connection, or series-parallel connection to form battery modules first, and then the plurality of battery modules may be in series connection, parallel connection, or series-parallel connection to form the battery. In other words, the plurality of battery cells may directly form the battery, or may form battery modules first, and then the battery modules form the battery. The battery is further arranged in the electrical device to provide electric energy for the electrical device.

Many design factors, for example, energy density, cycle life, discharge capacity, charge-discharge rate, and other performance parameters, should be considered in the development of the battery technology. In addition, the safety of the battery also needs to be considered.

For a battery, the main safety hazard comes from the charging and discharging process. In order to improve the safety performance of the battery, a thermal management component may be arranged inside the battery. The thermal management component is capable of being used for accommodating a fluid to adjust the temperature of a plurality of battery cells. The fluid here may be a liquid or a gas, and the temperature adjustment refers to heating or cooling the plurality of battery cells. In the case of cooling or lowering the temperature of the battery cells, the thermal management component is used for accommodating a cooling fluid to lower the temperature of the plurality of battery cells. In this case, the thermal management component may also be referred to as a cooling component, a cooling system, a cooling plate, or the like, and the fluid accommodated therein may also be referred to as a cooling medium or a cooling fluid, and more specifically, may be referred to as a cooling liquid or a cooling gas. In addition, the thermal management component may also be used for heating to raise the temperature of the plurality of battery cells, which is not limited in the embodiments of the present application. Optionally, the fluid may flow in a circulating manner to achieve a better temperature regulation effect. Optionally, the fluid may be water, a mixture of water and ethylene glycol, air, or the like.

In some related technologies, in order to increase the energy density of the battery and save the space in the battery box, the structure of the thermal management component is improved so that it occupies a smaller space in the battery.

For example, the structure of a water-cooling joint in the thermal management component is improved to change the connection method of the thermal management component so that it occupies a smaller space in the battery. Although some structural designs of the water-cooling joint in the prior art are capable of reducing the space occupied by the thermal management component, they may cause energy loss during transportation of the fluid in the thermal management component and affect the thermal management effect of the thermal management component.

In view of this, the embodiments of the present application provide a battery including a thermal management component which comprises a water-cooling joint, the water-cooling joint is used for being connected to an inlet of a fluid channel, and is used for guiding a fluid to the fluid channel, wherein movement directions of the fluid in front of and behind the inlet are different. The water-cooling joint includes: a first connecting pipeline, a first end of the first connecting pipeline is used for being connected to the inlet of the fluid channel, wherein in a direction close to the inlet of the fluid channel, the cross-section of the first connecting pipeline gradually increases. In the technical solution of the present application, the water-cooling joint includes the first connecting pipeline, the first end of the first connecting pipeline is connected to the inlet of the fluid channel, and in the direction close to the inlet of the fluid channel, the cross-section of the first connecting pipeline gradually increases. In other words, the fluid is guided to the inlet of the fluid channel in the first connecting pipeline, and at the first end of the first connecting pipeline connected to the inlet of the fluid channel, the flow cross-section of the fluid is the largest, the flow velocity may be reduced, and the impact with the fluid channel may be reduced, thereby reducing the energy loss.

The present invention relates to a battery and an electrical device. In general (not according to the invention) technical solutions described in the embodiments of the present application are applicable to various technical fields that use water-cooling joints to connect pipelines, for example, electrical, water conservancy, fire protection, and other technical fields.

It should be understood that in general (not according to the invention) the technical solutions described in the embodiments of the present application are not only limited to the technical fields described above, but also applicable to all technical fields that use water-cooling joints to connect pipelines.

Taking the battery of the invention, the thermal management component in the battery uses the above water-cooling joint to guide the fluid to the fluid channel in the thermal management component, which can reduce the energy loss during the transportation of the fluid in the thermal management component and improve the thermal management effect of the thermal management component.

The technical solutions described in the embodiments of the present application are all applicable to various devices using batteries, such as mobile phones, portable apparatuses, laptops, battery vehicles, electric toys, electric tools, electric vehicles, ships, spacecrafts, and the like. For example, the spacecrafts include airplanes, rockets, space shuttles, spaceships, and the like.

It should be understood that the technical solutions described in the embodiments of the present application are not only applicable to the apparatuses described above, but also applicable to all apparatuses using batteries. However, for the sake of brevity, the following embodiments are described by taking an electric vehicle as an example.

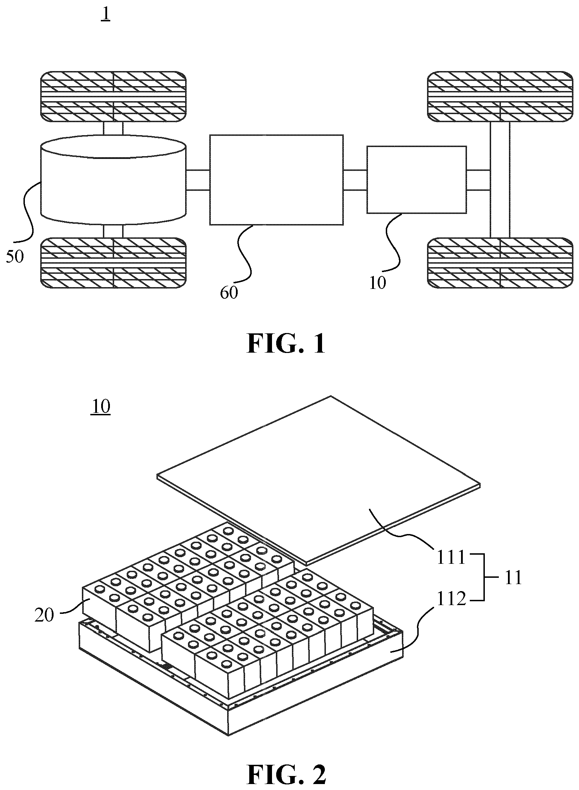

For example, as shown in Fig. 1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid electric vehicle, an extended range electric vehicle, or the like. A motor 50, a controller 60, and a battery 10 may be provided inside the vehicle 1, and the controller 60 is used for controlling the battery 10 to supply power to the motor 50. For example, the battery 10 may be arranged at the bottom or the head or the tail of the vehicle 1. The battery 10 may be used for supplying power to the vehicle 1, for example, the battery 10 may be used as an operating power source of the vehicle 1, which is used for a circuit system of the vehicle 1, for example, for operation power requirements of the vehicle 1 during starting, navigation, and running. In another example of the present application, the battery 10 can not only be used as the operating power source of the vehicle 1, but also can be used as a driving power source of the vehicle 1 to provide driving power for the vehicle 1 instead of or partially instead of fuel or natural gas.

In order to meet different power usage requirements, the battery 10 may include a plurality of battery cells. For example, Fig. 2 is a schematic exploded structural diagram of a battery 10 according to an embodiment of the present application, and the battery 10 may include a plurality of battery cells 20. Depending on different power requirements, the quantity of the battery cells 20 may be set to any value. The plurality of battery cells 20 may be in series connection, parallel connection, or series-parallel connection to achieve a larger capacity or power. The quantity of the battery cells 20 included in each battery 10 may be large, for the convenience of mounting, the battery cells 20 may be arranged in groups, and each group of battery cells 20 constitutes a battery module. The quantity of battery cells 20 included in the battery module is not limited, and may be set according to requirements. A battery can include a plurality of battery modules, and these battery modules may be in series connection, in parallel connection, or in parallel-series connection.

Optionally, the battery 10 may also include other structures. For example, the battery 10 may further include a convergence component for realizing electrical connection between the plurality of battery cells 20, for example, parallel connection, series connection, or parallel-series connection. Specifically, the convergence component may realize the electrical connection between the battery cells 20 by connecting electrode terminals of the battery cells 20. Further, the convergence component may be fixed to the electrode terminals of the battery cells 20 by welding. Electric energy of the plurality of battery cells 20 may be further led out through an electrically conductive mechanism penetrating the box body. Optionally, the electrically conductive mechanism may also belong to the convergence component.

The battery 10 may further include a box body 11 (or referred to as a cover body), the interior of the box body 11 is of a hollow structure, and the plurality of battery cells 20 are accommodated in the box body 11. As shown in Fig. 2, the box body 11 may include two parts, which are referred to as a cover portion 111 and a main body portion 112 respectively (or referred to as an upper box body and a lower box body), and the cover portion 111 and the main body portion 112 are snap-fitted together. The shapes of the cover portion 111 and the main body portion 112 may be determined according to the combined shape of the plurality of battery cells 20, and at least one of the cover portion 111 and the main body portion 112 has an opening. For example, only one of the cover portion 111 and the main body portion 112 included in the box body 11 may be a hollow cuboid with an opening, and the other may be in a plate shape to cover the opening. For example, as shown in Fig. 2, by taking the main body portion 112 being a hollow cuboid with only one surface as an opening surface and the cover portion 111 being plate-shaped as an example, the cover portion 111 covers the opening of the main body portion 112 to form the box body 11 having a closed chamber, and the chamber may be used for accommodating the plurality of battery cells 20.

Optionally, the cover portion 111 and the main body portion 112 included in the box body 11 in the embodiments of the present application may further have other shapes. For example, the cover portion 111 and the main body portion 112 both may be hollow rectangular solids and each has only one surface being an opening surface, the opening of the cover portion 111 and the opening of the main body portion 112 are arranged opposite to each other, and the cover portion 111 and the main body portion 112 are snap-fitted together to form the box body 11 having a closed chamber. The plurality of battery cells 20 are in parallel connection, in series connection, or in parallel-series connection to each other, and then placed in the box body formed by snap-fitting the cover portion 111 with the main body portion 112 together.

A water-cooling joint contained in the embodiments of the present application may be described specifically below with reference to the accompanying drawings.

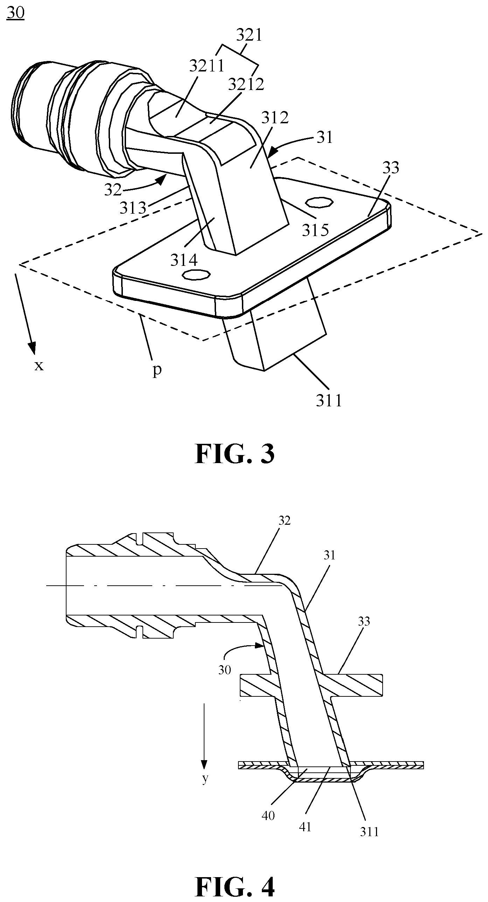

Fig. 3 is a schematic structural diagram of a water-cooling joint of the present application. As shown in Fig. 3, the water-cooling joint 30 includes a first connecting pipeline 31, and a first end 311 of the first connecting pipeline 31 is used for being connected to an inlet of a fluid channel, wherein in a direction close to the inlet, for example, an x direction (a direction pointed by an arrow) as shown in Fig. 3, the cross-section of the first connecting pipeline 31 gradually increases.

Referring to Fig. 3, the cross-section of the first connecting pipeline 31 is a plane seen after cutting the first connecting pipeline with a plane p, the plane p is perpendicular to the x direction, and the x direction is an extending direction of the first connecting pipeline 31.

In the embodiment of the present application, as shown in Fig. 4, the water-cooling joint 30 is used for being connected to the inlet 41 of the fluid channel 40, and is used for guiding the fluid to the fluid channel 40, wherein movement directions of the fluid in front of and behind the inlet 41 are different.

The movement directions of the fluid in front of and behind the inlet 41 are different because the movement direction of the fluid in front of the inlet 41 is not in a straight line with the extension direction of the fluid channel 40. When the fluid passes through the inlet 41 to flow into the fluid channel 40, the fluid may impact with the interior of the fluid channel 40, thereby changing the movement direction.

In the technical solution of the embodiment of the present application, the water-cooling joint 30 includes the first connecting pipeline 31, the first end 311 of the first connecting pipeline 31 is connected to the inlet 41 of the fluid channel 40, and in the direction close to the inlet 41 of the fluid channel 40, the cross-section of the first connecting pipeline 31 gradually increases. In other words, the fluid is guided to the inlet 41 of the fluid channel 40 in the first connecting pipeline 31, and at the first end 311 of the first connecting pipeline 31 connected to the inlet 41 of the fluid channel 40, the flow cross-section of the fluid is the largest, the flow velocity may be reduced, and the impact with the fluid channel may be reduced, thereby reducing the energy loss.

Optionally, in the embodiment of the present application, referring to Fig. 3 and Fig. 4, the water-cooling joint 30 includes a second connecting pipeline 32, a second end of the first connecting pipeline 31 is connected to the second connecting pipeline 32, and the second connecting pipeline 32 forms an angle with the first connecting pipeline 31.

Optionally, as shown in Figures 3 and 4, the second connecting pipeline 32 may include a transition surface 321. Specifically, the transition surface 321 may be formed by connecting a transition arc surface 3211 and a transition plane 3212, which is easier for connecting the first connecting pipeline 31 to the second connecting pipeline 32.

The first connecting pipeline 31 is connected to the second connecting pipeline 32 for transporting the fluid, and the connecting method of forming the angle between the first connecting pipeline 31 and the second connecting pipeline 32 is capable of saving the space occupied by the first connecting pipeline 31 and the second connecting pipeline 32 in a length direction.

Optionally, in the embodiment of the present application, the angle formed by the second connecting pipeline 32 and the first connecting pipeline 31 is an obtuse angle, so as to reduce a centripetal force required by the fluid flowing at the connection between the second connecting pipeline 32 and the first connecting pipeline 31, and reduce the flow separation.

Optionally, in the embodiment of the present application, as shown in Fig. 3 and Fig. 4, the connection between the first connecting pipeline 31 and the second connecting pipeline 32 is set in an arc shape.

The connection adopts an arc-shaped design to guide the fluid to flow, which can reduce a backflow area at an outer side of the flow and reduce the flow loss at the connection.

Optionally, in the embodiment of the present application, a connecting surface of the first end 311 and the inlet 41 is non-circular, so that when the fluid flows in the first connecting pipeline, a component of a normal force on an outer side wall surface of the first connecting pipeline can better provide the centripetal force, reduce the flow separation, and reduce the pressure drop.

Optionally, in the embodiment of the present application, the connecting surface of the first end 311 and the inlet 41 is semicircular, so as to further reduce the flow separation and reduce the pressure drop.

It should be understood that the semicircular connecting surface of the first end 311 and the inlet 41 is only an example embodiment of the present application, and the connecting surface of the first end 311 and the inlet 41 is not limited to semicircular, and may also be in another non-circular shape, which is not limited in the present application.

Optionally, in the embodiment of the present application, as shown in Fig. 3 and Fig. 4, the first connecting pipeline 31 is a non-circular pipeline, so as to reduce the centripetal force required by the fluid flowing in the first connecting pipeline, and reduce the flow separation.

Optionally, in the embodiment of the present application, the first connecting pipeline 31 includes the arc surface and the plane, and the arc surface and the plane are connected to form the first connecting pipeline. Therefore, when the fluid flows in the first connecting pipeline, the component of the plane normal force of the first connecting pipeline can better provide the centripetal force.

Specifically, the first connecting pipeline 31 may, as shown in Fig. 3, include the plane 312 and the arc surface 313, and may further include two side surfaces 314 and 315. The two side surfaces 314 and 315 may be used as connecting transition surfaces of the plane 312 and the arc surface 313, so that the structure of the first connecting pipeline 31 is smoother to reduce the energy loss of the fluid flowing therein. It should be understood that the first connecting pipeline 31 may also only include the plane 312 and the arc surface 313, which is not limited in the present application.

It should be understood that the first connecting pipeline 31 shown in Fig. 3 is only an example embodiment of the present application, and does not constitute a limitation to the structure of the first connecting pipeline 31 in the embodiment of the present application.

Optionally, in the embodiment of the present application, as shown in Fig. 4, the water-cooling joint 30 includes a first fixing portion 33, and the first fixing portion 33 surrounds the outer side of the first connecting pipeline 31 and is fixedly connected to the outer side of the first connecting pipeline 31.

The first fixing portion 33 surrounds the outer side of the first connecting pipeline 31 and is fixedly connected to the outer side of the first connecting pipeline 31, for fixing the first connecting pipeline 31, improving the stability of the water-cooling joint 30, and ensuring that a connection position of the first connecting pipeline 31 and the inlet 41 of the fluid channel 40 is fixed, so that the first connecting pipeline 31 guides the fluid to the fluid channel 40 through the inlet 41.

Optionally, in the embodiment of the present application, as shown in Fig. 4, the first fixing portion 33 is a plate-shaped structure parallel to the connecting surface of the first end 311 and the inlet 41, so as to facilitate the fixing of the first fixing portion 33, thereby better fixing the water-cooling joint 30.

Optionally, in the embodiment of the present application, the first connecting pipeline 31 and the first fixing portion 33 are integrally formed. The structure is stable and firm, easy to assemble, and easy to operate.

It should be understood that the first connecting pipeline 31 and the first fixing portion 33 may also be processed separately and then assembled, which is not limited in the present application.

According to some embodiments of the present application, referring to Fig. 4, Fig. 5, and Fig. 6, the present application comprises a water-cooling joint 30, the water-cooling joint 30 includes a first connecting pipeline 31, a first end 311 of the first connecting pipeline 31 is connected to an inlet 41 of a fluid channel 40, and in a direction close to the inlet 41 of the fluid channel 40, the cross-section of the first connecting pipeline 31 gradually increases. The water-cooling joint 30 further includes a second connecting pipeline 32, the second end of the first connecting pipeline 31 is connected to the second connecting pipeline 32. Specifically, the second connecting pipeline 32 forms an angle with the first connecting pipeline 31, and the angle may be an obtuse angle. The connection between the first connecting pipeline 31 and the second connecting pipeline 32 may be set in an arc shape. The first connecting pipeline 31 is a non-circular pipe. The water-cooling joint 30 further includes a first fixing portion 33, the first fixing portion 33 surrounds the outer side of the first connecting pipeline 31, and is fixedly connected to the outer side of the first connecting pipeline 31. The water-cooling joint 30 is fixed by the first fixing portion 33, so that the water-cooling joint 30 guides a fluid to the fluid channel 40.

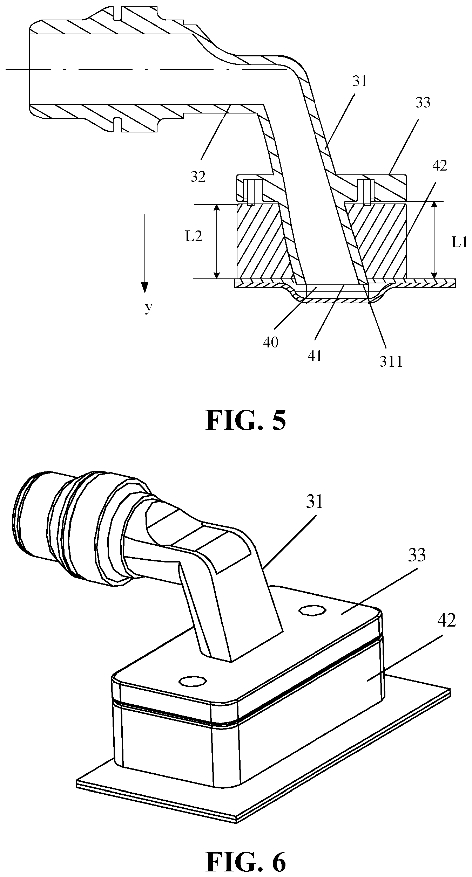

The embodiments of the present application provide a battery including a thermal management component, as shown in Fig. 5, including: a fluid channel 40; a second fixing portion 42, the second fixing portion 42 surrounding an inlet 41 of the fluid channel 40, and the water-cooling joint 30 described according to any above embodiment, the water-cooling joint 30 being connected to the second fixing portion 42.

The water-cooling joint 30 in the thermal management component guides a fluid to flow into the fluid channel 40, and the structure is ingenious in design, which is capable of reducing energy loss during transportation of the fluid in the thermal management component and ensuring a thermal management effect of the thermal management component. In addition, the second fixing portion 42 is connected to the water-cooling joint 30 to fix the water-cooling joint 30, thereby ensuring that the water-cooling joint 30 can smoothly guide the fluid to flow into the fluid channel 40.

Optionally, in the embodiment of the present application, as shown in Fig. 5, the second fixing portion 42 is connected to the first fixing portion 33 of the water-cooling joint 30, and the first fixing portion 33 surrounds the outer side of the first connecting pipeline 31 and is fixedly connected to the outer side of the first connecting pipeline 31.

Optionally, the second fixing portion 42 and the first fixing portion 33 may be connected by bonding, welding, bolts, or the like, which is not limited in the present application.

The second fixing portion 42 is connected to the first fixing portion 33 of the water-cooling joint 30, so as to fix the first fixing portion 33, thereby fixing the water-cooling joint 30, ensuring that a connection position between the first connecting pipeline 31 and the inlet 41 of the fluid channel 40 is fixed, so that the first connecting pipeline 31 guides the fluid to the fluid channel 40 through the inlet 41.

It should be understood that the connection between the second fixing portion 42 and the first fixing portion 33 of the water-cooling joint 30 described in the above embodiment is only an example description and does not constitute any limitation to the present application. The second fixing portion 42 may also be connected to another component of the water-cooling joint 30 to realize the fixing of the water-cooling joint 30, which is not limited in the present application.

Optionally, in the embodiment of the present application, as shown in Fig. 5 and Fig. 6, the second fixing portion 42 is a plate-shaped structure parallel to the connecting surface of the first end 311 and the inlet 41, so as to facilitate the fixing of the first fixing portion 33 and the second fixing portion 42, thereby better fixing the water-cooling joint 30.

It should be understood that the second fixing portion 42 being a plate-shaped structure is only an example description and does not constitute any limitation to the present application. The second fixing portion 42 can choose an appropriate structural design according to different connection methods and according to connection requirements with different components in the water-cooling joint 30, which is not limited in the present application.

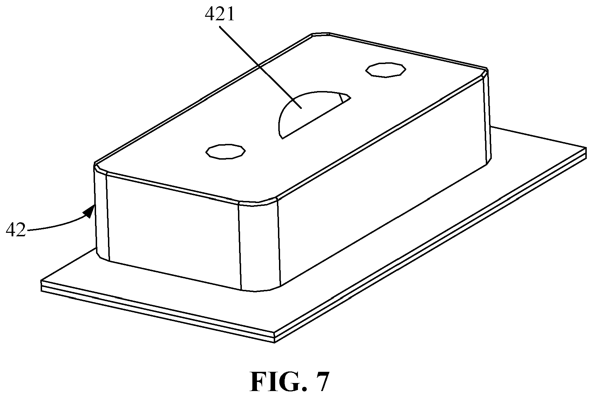

Optionally, in the embodiment of the present application, as shown in Fig. 7, the second fixing portion 42 is provided with a through hole 421, and the first connecting pipeline 31 is connected to the inlet 41 through the through hole 421.

The second fixing portion 42 is provided with the through hole 421 to facilitate the connection between the first end 311 of : the first connecting pipeline 31 and the inlet 41 of the fluid channel 40.

Optionally, in the embodiment of the present application, as shown in Fig. 5, in a first direction, the distance L1 from the first fixing portion 33 to the first end 311 is the same as the thickness L2 of the second fixing portion 42, and the connecting surface of the first end 311 and the inlet 41 is perpendicular to the first direction, for example, the first direction is a y direction in Fig. 5.

It should be understood that due to processing errors, in the first direction y, the distance L1 from the first fixing portion 33 to the first end 311 and the thickness L2 of the second fixing portion 42 may be different within a certain tolerance range.

In this way, when the first fixing portion 33 is connected to the second fixing portion 42, the first connecting pipeline 31 just matches the inlet 41 of the fluid channel 40, so that the first connecting pipeline 31 guides the fluid to the fluid channel 40.

It should be understood that in general (not according to the invention) the thermal management component described in the embodiment of the present application is applicable to various devices using thermal management components, such as vehicles, ships, and spacecrafts.

The embodiments of the present application provide a battery 10, including a battery cell 20 and the thermal management component as described above. The thermal management component is used for adjusting the temperature of the battery cell 20.

The thermal management component contained in the present application is arranged in the battery 10 to adjust the temperature of the battery cell 20 in the battery 10. On the one hand, it can cooperate with the structural design of other components in the battery 10 to reduce the space occupied by the thermal management component, reduce the volume of the battery 10, and improve the energy density of the battery 10; on the other hand, it is capable of reducing the energy loss during the transportation of the fluid in the thermal management component, and ensuring the thermal management effect of the thermal management component.

The embodiments of the present application further provide an electrical device, including the battery 10 in the above embodiment. The battery 10 is used for providing electric energy. Optionally, the electrical device may be a vehicle 1, a ship, a spacecraft, or the like, but this is not limited in the embodiments of the present application.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery (10), comprising:
a battery cell (20); and
a thermal management component, wherein the thermal management component is used for adjusting the temperature of the battery cell (20),
wherein the thermal management component comprises:
a fluid channel (40);
a second fixing portion (42), wherein the second fixing portion (42) surrounds an inlet (41) of the fluid channel (40); and
a water-cooling joint (30), wherein the water-cooling joint (30) is connected to the second fixing portion (42),
***characterized in that***
the water-cooling joint (30) is used for being connected to the inlet (41) of the fluid channel (40), and is used for guiding a fluid to the fluid channel (40), wherein movement directions of the fluid in front of and behind the inlet (41) are different, and the water-cooling joint (30) comprises:
a first connecting pipeline (31), wherein a first end (311) of the first connecting pipeline (31) is used for being connected to the inlet (41), and in a direction close to the inlet (41), the cross-section of the first connecting pipeline (31) increases gradually.

2. The battery (10) according to claim 1, wherein the water-cooling joint (30) comprises a second connecting pipeline (32), a second end of the first connecting pipeline (31) is connected to the second connecting pipeline (32), and the second connecting pipeline (32) forms an angle with the first connecting pipeline (31), and optionally wherein the angle is an obtuse angle.

3. The battery (10) according to claim 2, wherein the connection between the first connecting pipeline (31) and the second connecting pipeline (32) is set in an arc shape.

4. The battery (10) according to any one of claims 1 to 3, wherein the first connecting pipeline (31) is a non-circular pipeline.

5. The battery (10) according to any one of claims 1 to 4, wherein the first connecting pipeline (31) comprises an arc surface (312) and a plane (313), and the arc surface (312) is connected to the plane (313) to form the first connecting pipeline (31).

6. The battery (10) according to any one of claims 1 to 5, wherein the water-cooling joint (30) comprises a first fixing portion (33), and the first fixing portion (33) surrounds an outer side of the first connecting pipeline (31), and is fixedly connected to the outer side of the first connecting pipeline (31).

7. The battery (10) according to claim 6, wherein the first fixing portion (33) is a plate-shaped structure parallel to a connecting surface of the first end (311) and the inlet (41).

8. The battery (10) according to claim 6 or 7, wherein the first connecting pipeline (31) and the first fixing portion (33) are formed integrally.

9. The battery (10) according to any one of claims 1 to 8, wherein the second fixing portion (42) is connected to the first fixing portion (33) of the water-cooling joint (30), and the first fixing portion (33) surrounds an outer side of the first connecting pipeline (31), and is fixedly connected to the outer side of the first connecting pipeline (31).

10. The battery (10) according to any one of claims 1 to 9, wherein the second fixing portion (42) is a plate-shaped structure parallel to a connecting surface of the first end (311) and the inlet (41).

11. The battery (10) according to any one of claims 9 to 10, wherein the second fixing portion (42) is provided with a through hole (421), and the first connecting pipeline (31) is connected to the inlet (41) through the through hole (421).

12. The battery (10) according to any one of claims 9 to 11, wherein in a first direction, the distance from the first fixing portion (33) to the first end (311) is the same as the thickness of the second fixing portion (42), and a connecting surface of the first end (311) and the inlet (41) is perpendicular to the first direction.

13. An electrical device, comprising the battery (10) according to any one of claims 1 to 12, wherein the battery (10) is used for providing electric energy.

## Patentansprüche

1. Batterie (10), umfassend:
eine Batteriezelle (20); und
eine Wärmemanagementkomponente, wobei die Wärmemanagementkomponente zur Regelung der Temperatur der Batteriezelle (20) dient,
wobei die Wärmemanagementkomponente umfasst:
einen Fluidkanal (40);
einen zweiten Befestigungsabschnitt (42), wobei der zweite Befestigungsabschnitt (42) einen Einlass (41) des Fluidkanals (40) umgibt; und
eine Wasserkühlverbindung (30), wobei die Wasserkühlverbindung (30) mit dem zweiten Befestigungsabschnitt (42) verbunden ist,
***dadurch gekennzeichnet, dass***
die Wasserkühlverbindung (30) dazu dient, mit dem Einlass (41) des Fluidkanals (40) verbunden zu werden, und dazu dient, ein Fluid zum Fluidkanal (40) zu leiten, wobei die Bewegungsrichtungen des Fluids vor und hinter dem Einlass (41) unterschiedlich sind, und die Wasserkühlverbindung (30) umfasst:
eine erste Verbindungsleitung (31), wobei ein erstes Ende (311) der ersten Verbindungsleitung (31) dazu dient, mit dem Einlass (41) verbunden zu werden, und sich der Querschnitt der ersten Verbindungsleitung (31) in einer Richtung nahe dem Einlass (41) allmählich vergrößert.

2. Batterie (10) nach Anspruch 1, wobei die Wasserkühlverbindung (30) eine zweite Verbindungsleitung (32) umfasst, ein zweites Ende der ersten Verbindungsleitung (31) mit der zweiten Verbindungsleitung (32) verbunden ist und die zweite Verbindungsleitung (32) einen Winkel mit der ersten Verbindungsleitung (31) bildet, und wobei der Winkel gegebenenfalls ein stumpfer Winkel ist.

3. Batterie (10) nach Anspruch 2, wobei die Verbindung zwischen der ersten Verbindungsleitung (31) und der zweiten Verbindungsleitung (32) bogenförmig ausgebildet ist.

4. Batterie (10) nach einem der Ansprüche 1 bis 3, wobei die erste Verbindungsleitung (31) eine nicht kreisförmige Leitung ist.

5. Batterie (10) nach einem der Ansprüche 1 bis 4, wobei die erste Verbindungsleitung (31) eine Bogenfläche (312) und eine Ebene (313) umfasst und die Bogenfläche (312) mit der Ebene (313) verbunden ist, um die erste Verbindungsleitung (31) zu bilden.

6. Batterie (10) nach einem der Ansprüche 1 bis 5, wobei die Wasserkühlungsverbindung (30) einen ersten Befestigungsabschnitt (33) umfasst, und der erste Befestigungsabschnitt (33) eine Außenseite der ersten Verbindungsleitung (31) umgibt und fest mit der Außenseite der ersten Verbindungsleitung (31) verbunden ist.

7. Batterie (10) nach Anspruch 6, wobei der erste Befestigungsabschnitt (33) eine plattenförmige Struktur ist, die parallel zu einer Verbindungsfläche des ersten Endes (311) und des Einlasses (41) verläuft.

8. Batterie (10) nach Anspruch 6 oder 7, wobei die erste Verbindungsleitung (31) und der erste Befestigungsabschnitt (33) einstückig ausgebildet sind.

9. Batterie (10) nach einem der Ansprüche 1 bis 8, wobei der zweite Befestigungsabschnitt (42) mit dem ersten Befestigungsabschnitt (33) der Wasserkühlverbindung (30) verbunden ist und der erste Befestigungsabschnitt (33) eine Außenseite der ersten Verbindungsleitung (31) umgibt und fest mit der Außenseite der ersten Verbindungsleitung (31) verbunden ist.

10. Batterie (10) nach einem der Ansprüche 1 bis 9, wobei der zweite Befestigungsabschnitt (42) eine plattenförmige Struktur ist, die parallel zu einer Verbindungsfläche des ersten Endes (311) und des Einlasses (41) verläuft.

11. Batterie (10) nach einem der Ansprüche 9 bis 10, wobei der zweite Befestigungsabschnitt (42) mit einem Durchgangsloch (421) versehen ist und die erste Verbindungsleitung (31) durch das Durchgangsloch (421) mit dem Einlass (41) verbunden ist.

12. Batterie (10) nach einem der Ansprüche 9 bis 11, wobei in einer ersten Richtung der Abstand vom ersten Befestigungsabschnitt (33) zum ersten Ende (311) gleich der Dicke des zweiten Befestigungsabschnitts (42) ist und eine Verbindungsfläche des ersten Endes (311) und des Einlasses (41) senkrecht zur ersten Richtung steht.

13. Elektrisches Gerät, umfassend die Batterie (10) gemäß einem der Ansprüche 1 bis 12, wobei die Batterie (10) zur Bereitstellung elektrischer Energie verwendet wird.

## Revendications

1. Batterie (10), comprenant :
une cellule de batterie (20) ; et
un composant de gestion thermique, dans laquelle le composant de gestion thermique est utilisé pour réguler la température de la cellule de batterie (20),
dans laquelle le composant de gestion thermique comprend :
un canal de fluide (40) ;
une deuxième partie de fixation (42), dans laquelle la deuxième partie de fixation (42) entoure une entrée (41) du canal de fluide (40) ; et
un raccord de refroidissement par eau (30), dans lequel le raccord de refroidissement par eau (30) est relié à la deuxième partie de fixation (42),
***caractérisé en ce que***
le raccord de refroidissement par eau (30) est utilisé pour être relié à l'entrée (41) du canal de fluide (40), et est utilisé pour guider un fluide vers le canal de fluide (40), dans lequel les directions de déplacement du fluide en amont et en aval de l'entrée (41) sont différentes, et le raccord de refroidissement par eau (30) comprend :
une première conduite de raccordement (31), dans laquelle une première extrémité (311) de la première conduite de raccordement (31) est destinée à être raccordée à l'entrée (41), et dans une direction proche de l'entrée (41), la section transversale de la première conduite de raccordement (31) augmente progressivement.

2. Batterie (10) selon la revendication 1, dans laquelle le raccord de refroidissement par eau (30) comprend une deuxième conduite de raccordement (32), une deuxième extrémité de la première conduite de raccordement (31) est raccordée à la deuxième conduite de raccordement (32), et la deuxième conduite de raccordement (32) forme un angle avec la première conduite de raccordement (31), et éventuellement dans laquelle l'angle est un angle obtus.

3. Batterie (10) selon la revendication 2, dans laquelle la jonction entre la première conduite de raccordement (31) et la deuxième conduite de raccordement (32) est configurée en forme d'arc.

4. Batterie (10) selon l'une quelconque des revendications 1 à 3, dans laquelle la première conduite de raccordement (31) est une conduite non circulaire.

5. Batterie (10) selon l'une quelconque des revendications 1 à 4, dans laquelle la première conduite de raccordement (31) comprend une surface courbe (312) et un plan (313), et la surface courbe (312) est reliée au plan (313) pour former la première conduite de raccordement (31).

6. La batterie (10) selon l'une quelconque des revendications 1 à 5, dans laquelle le raccord de refroidissement par eau (30) comprend une première partie de fixation (33), et la première partie de fixation (33) entoure un côté extérieur de la première conduite de raccordement (31), et est reliée de manière fixe au côté extérieur de la première conduite de raccordement (31).

7. Batterie (10) selon la revendication 6, dans laquelle la première partie de fixation (33) est une structure en forme de plaque parallèle à une surface de raccordement de la première extrémité (311) et de l'entrée (41).

8. Batterie (10) selon la revendication 6 ou 7, dans laquelle la première conduite de raccordement (31) et la première partie de fixation (33) sont formées d'un seul tenant.

9. Batterie (10) selon l'une quelconque des revendications 1 à 8, dans laquelle la deuxième partie de fixation (42) est reliée à la première partie de fixation (33) du raccord de refroidissement par eau (30), et la première partie de fixation (33) entoure un côté extérieur de la première conduite de raccordement (31) et est reliée de manière fixe au côté extérieur de la première conduite de raccordement (31).

10. Batterie (10) selon l'une quelconque des revendications 1 à 9, dans laquelle la deuxième partie de fixation (42) est une structure en forme de plaque parallèle à une surface de raccordement de la première extrémité (311) et de l'entrée (41).

11. Batterie (10) selon l'une quelconque des revendications 9 à 10, dans laquelle la deuxième partie de fixation (42) est pourvue d'un trou traversant (421), et la première conduite de raccordement (31) est reliée à l'entrée (41) à travers le trou traversant (421).

12. Batterie (10) selon l'une quelconque des revendications 9 à 11, dans laquelle, dans une première direction, la distance entre la première partie de fixation (33) et la première extrémité (311) est égale à l'épaisseur de la deuxième partie de fixation (42), et une surface de raccordement de la première extrémité (311) et de l'entrée (41) est perpendiculaire à la première direction.

13. Dispositif électrique, comprenant la batterie (10) selon l'une quelconque des revendications 1 à 12, dans lequel la batterie (10) est utilisée pour fournir de l'énergie électrique.
